# EUROPÄISCHE PATENTSCHRIFT

(11) **EP 4 289 610 B1**
(45) Veröffentlichungstag und Bekanntmachung des Hinweises auf die Patenterteilung: **22.10.2025**
(21) Anmeldenummer: 23173110.0
(22) Anmeldetag: 12.05.2023
(51) Int. Cl.: B29D 30/30

(54) **AUFLEGEVORRICHTUNG ZUM AUFLEGEN VON VORABGELÄNGTEN MATERIALSTREIFEN**
LAYING DEVICE FOR LAYING UP STRIPS OF MATERIAL PREVIOUSLY CUT TO LENGTH
DISPOSITIF POUR DÉPOSER DES BANDES DE MATÉRIAU PRÉ-GÉLANCÉES

(30) Priorität: 08.06.2022 DE 102022205810
(43) Veröffentlichungstag der Anmeldung: 13.12.2023
(73) Patentinhaber: Continental Reifen Deutschland GmbH, 30175 Hannover (DE)
(72) Erfinder: Schischke, Henrik, 30165 Hannover (DE); Gümmer, Oliver, 30165 Hannover (DE); Meier, Marvin, 30165 Hannover (DE); Gajdosik, Pavel, 30165 Hannover (DE)
(74) Vertreter: Continental Corporation

(56) Entgegenhaltungen:
- EP-A1- 2 965 895
- EP-A1- 3 495 131
- EP-A2- 1 800 845
- WO-A1-2015/101853
- DE-A1- 102005 018 964
- DE-A1- 102006 017 882
- US-A1- 2018 339 476
- US-A1- 2021 178 714

## Beschreibung

Die Erfindung betrifft eine Auflegevorrichtung sowie ein Verfahren zum Auflegen von vorabgelängten Materialstreifen für Reifenbauteile auf einer rotierenden Reifenbautrommel, wobei die Vorrichtung ein erstes Förderband aufweist, wobei die Kontur und Ausrichtung eines ersten Materialstreifens auf dem ersten Förderband automatisiert erfasst werden und die zur Reifenbautrommel axiale Ausrichtung des ersten Materialstreifens automatisiert an eine Sollgröße angepasst werden.

Weiterhin betrifft die Erfindung eine Verwendung einer derartigen Auflegevorrichtung und ein Computerprogrammprodukt für ein derartiges Verfahren.

Verfahren und Auflegevorrichtungen der genannten Art zum Auflegen von vorabgelängten Materialstreifen für Reifenbauteile sind beispielweise aus der EP 3 495 131 A1, der EP 1 800 845 A2 und der US 2018/339476 A1 bekannt. Bekannte Auflegevorrichtungen weisen genau ein Förderband auf, das axial zu einer Reifenbautrommel verfahren werden kann. Hierbei hat es sich als nachteilhaft herausgestellt, dass bei einem zeitgleichen Auflegen von zumindest zwei Materialstreifen eine Korrektur der Kontur und Ausrichtung eines Materialstreifen nicht möglich ist beziehungsweise sich negativ auf das Auflegen von weiteren Materialstreifen auswirkt.

Vor diesem Hintergrund liegt der Erfindung die Aufgabe zugrunde, eine Vorrichtung und ein Verfahren der eingangs genannten Art derart auszuführen, dass beim zeitgleichen Auflegen von zumindest zwei Materialstreifen auf eine Reifenbautrommel die Korrektur der Kontur und Ausrichtung eines Materialstreifens keinen Einfluss auf die Korrektur der Kontur und Ausrichtung zumindest eines zweiten Materialstreifens hat.

Diese Aufgabe wird gelöst mit einer Vorrichtung gemäß den Merkmalen des Patentanspruches 1 sowie einem Verfahren, einer Verwendung und einem Computerprogrammprodukt gemäß den nebengeordneten Ansprüchen. Die Unteransprüche betreffen besonders zweckmäßige Weiterbildungen der Erfindung.

Erfindungsgemäß ist also eine Auflegevorrichtung zum Auflegen von vorabgelängten Materialstreifen für Reifenbauteile auf einer rotierenden Reifenbautrommel vorgesehen, wobei die Vorrichtung ein erstes Förderband aufweist. Die Kontur und Ausrichtung eines ersten Materialstreifens auf dem ersten Förderband sind automatisiert erfassbar. Die zur Reifenbautrommel axiale Ausrichtung des ersten Materialstreifens ist automatisiert an eine Sollgröße anpassbar, wobei die Auflegevorrichtung dazu eingerichtet ist zeitgleich die Kontur und Ausrichtung eines zweiten Materialstreifens auf einem zweiten Förderband automatisiert zu erfassen und die zur Reifenbautrommel axiale Ausrichtung des zweiten Materialstreifens unabhängig von der axialen Ausrichtung des ersten Materialstreifens automatisiert an eine Sollgröße anzupassen.

Das Förderband besteht nicht nur das Bandmaterial selbst sondern weist ebenfalls zumindest die zylinderförmigen Lagerungen sowie die Antriebe an den Lagerungen auf. Ein automatisiertes Erfassen einer Kontur und Ausrichtung eines Materialstreifens kann beispielweise mit einer Vermessungsvorrichtung wie einer Kamera erfolgen.

Durch die zeitgleiche Erfassbarkeit der Kontur und Ausrichtung von beiden Materialstreifen auf den beiden Förderbändern und zeitgleiche Korrektur der Abweichungen von Sollgrößen der Kontur und Ausrichtung der Materialstreifen durch eine zur Reifenbautrommel axiale Verfahrbarkeit der Förderbänder wird es ermöglicht zwei Materialstreifen zeitgleich mit hoher axialer Genauigkeit aufzulegen. Eine Verringerung der Taktzeit bei verringertem Personeneinsatz und erhöhter Qualität eines Reifenrohling wird ermöglicht.

Eine vorteilhafte Weiterbildung sieht vor, dass das erste Förderband und das zweite Förderband Haltemittel aufweisen zum Halten des ersten Materialstreifens und des zweiten Materialstreifens. Hierdurch wird sichergestellt, dass keine Relativbewegung zwischen dem Materialstreifen und dem Bandmaterial des Förderbandes stattfindet, nachdem die Kontur und Ausrichtung des Materialstreifens erfasst wurde und bevor der Materialstreifen auf der Reifenbautrommel aufgelegt wird. Eine besonders hohe Auflegegenauigkeit wird erreicht.

Eine weitere vorteilhafte Weiterbildung sieht vor, dass die Haltemittel den ersten Materialstreifen und den zweiten Materialstreifen an einer Vielzahl von Stellen, und zwar an mindestens drei Stellen, insbesondere aber über die gesamte Ausdehnung der Materialstreifen, an den Förderbändern halten. Eine Vielzahl von Stellen an denen Materialstreifen gehalten werden vermindert auch kleinere Bewegungen, die zwischen zwei Haltemitteln möglich sind. Wird der Materialstreifen über seine gesamte Ausdehnung, also flächig am Förderband gehalten, werden auch kleine Bewegungen effektiv vermieden und eine besonders hohe Auflegegenauigkeit ermöglicht.

Eine weitere vorteilhafte Weiterbildung sieht vor, dass die Haltemittel in Form von Magneten oder in Form eines Vakuumbandes ausgeführt sind. Dies ermöglicht ein einfaches sowie kosteneffizientes und sicheres Halten von Materialstreifen auf Förderbändern.

Eine weitere vorteilhafte Weiterbildung sieht vor, dass das erste Förderband dazu eingerichtet ist mit einer Geschwindigkeit zu fördern die von der Geschwindigkeit des zweiten Förderbandes abweicht. Hierdurch können Abweichungen der Kontur und Ausrichtung von Materialstreifen in ihrer Längsrichtung, also der Umfangsrichtung des Reifenrohlings, kompensiert werden. Wird ein Förderband beispielweise verlangsamt, wird der Materialstreifen mit einer höheren Spannung auf die Reifenbautrommel aufgelegt, was zu einer Streckung des Materialstreifens führt.

Eine weitere vorteilhafte Weiterbildung sieht vor, dass die Auflegevorrichtung eine Vermessungsvorrichtung insbesondere eine Kamera zur Vermessung der Kontur und Ausrichtung des ersten Materialstreifens und des zweiten Materialstreifens aufweist, wobei die von der Vermessungsvorrichtung erzeugten Messgrößen mittels einer Prozessoreinheit der Auflegevorrichtung auswertbar sind und zur Ansteuerung von Aktoren der Auflegevorrichtung zum Positionieren von dem ersten Materialstreifen und dem zweiten Materialstreifen verwendbar sind. Eine Vermessungsvorrichtung sowie eine Prozessoreinheit und Aktoren als Bestandteil der Auflegevorrichtung ermöglichen eine einfache sowie zuverlässig funktionierende Realisierung der Auflegevorrichtung.

Eine weitere vorteilhafte Weiterbildung sieht vor, dass das erste Förderband und das zweite Förderband mittels voneinander unabhängiger Aktoren axial zur Reifenbautrommel verfahrbar gelagert sind, wobei insbesondere zwei Aktoren zum Verfahren eines Förderbandes vorgesehen sind. Voneinander unabhängige Aktoren ermöglichen in einfacher Weise ein zeitgleiches sowie unabhängiges Verfahren beider Förderbänder. Eine hohe Verfahrgenauigkeit wird in einfacher Weise erreicht, indem jedes Förderband mit zwei Aktoren verfahren wird, da hierdurch eine Lagerung mit hoher Steifheit und Spielfreiheit ermöglicht wird, indem die Antriebe an unterschiedlichen Anbaupunkten vorgesehen werden. Eine hohe Verfahrgenauigkeit wird in einfacher Weise erreicht, indem jedes Förderband mit zwei Aktoren verfahren wird, da hierdurch eine Lagerung mit hoher Steifheit und Spielfreiheit ermöglicht wird, indem die Antriebe an unterschiedlichen Anbaupunkten vorgesehen werden.

Eine besonders hohe Verfahrgeschwindigkeit bei einer hohen Verfahrgenauigkeit wird in einfacher Weise erreicht, indem jedes Förderband mit zwei Aktoren verfahren wird.

Eine weitere vorteilhafte Weiterbildung sieht vor, dass die Auflegevorrichtung dazu eingerichtet ist die Materialstreifen von unten oder von oben auf die Reifenbautrommel aufzulegen. Hierbei wird unter von oben, der Anziehungskraft des Gravitationsfelds folgend, verstanden. Dadurch, dass die Auflegevorrichtung dazu eingerichtet den Materialstreifen von unten oder von oben auf die Reifenbautrommel aufzulegen, weist sie eine besondere Anpassungsfähigkeit an Reifenbaumaschinen auf, was sowohl das Nachrüsten von Reifenbaumaschinen mit der erfindungsgemäßen Auflegevorrichtung vereinfacht als auch bei Neukonstruktionen Freiheitsgrade in der Konstruktion eröffnet.

Eine weitere vorteilhafte Weiterbildung sieht vor, dass die Materialstreifen Wulstverstärker sind. Wulstverstärker sind mit besonders hoher Genauigkeit aufzulegen, wobei sie auf Superbauteile aufgelegt werden, die ein unebene Unterlage ausbilden, so dass besonders hohe Anforderungen an den Auflegeprozess bestehen.

Eine weitere vorteilhafte Weiterbildung sieht vor, dass das erste Förderband und das zweite Förderband translatorisch und beziehungsweise oder rotatorisch verfahrbar auf einem Rahmen gelagert sind, wobei eine mittelbare Lagerung beispielweise mittels eines Hilfsrahmens möglich ist. Eine translatorische und beziehungsweise oder rotatorische Verfahrbarkeit der Förderbänder ermöglicht eine flexiblere Anordnung der Zuführung von den Materialbändern an die Förderbänder und eine freiere Anordnung im Verhältnis zu den Reifenbaumaschinen. Ein Nachrüsten der Auflegevorrichtung in bestehende Reifenbauanlagen wird vereinfacht.

Erfindungsgemäß ist ein Verfahren zum Betreiben einer Auflegevorrichtung, insbesondere einer erfindungsgemäßen Auflegevorrichtung, mit folgenden Schritten vorgesehen:
a) Auflegen von einem ersten Materialstreifen auf ein erstes Förderband und von einem zweiten Materialstreifen auf ein zweites Förderband,
b) Fördern der Materialstreifen mit den Förderbändern,
c) Vermessen der Kontur und Ausrichtung der Materialstreifen unter Erzeugung von Messwerten,
d) Vergleichen der Messwerte mit Sollgrößen und Berechnung von Verfahrwegen des ersten Förderbandes und des zweiten Förderbandes axial zur Reifenbautrommel,
e) Zeitgleiches Auflegen der Materialstreifen auf der Reifenbautrommel, während voneinander unabhängig das erste Förderband und das zweite Förderband axial zur Reifenbautrommel verfahren werden.

Durch das zeitgleiche Erfassen der Kontur und Ausrichtung der beiden Materialstreifen auf den Förderbändern und Korrektur der Abweichungen von Sollgrößen der Kontur und Ausrichtung der Materialstreifen durch eine zur Reifenbautrommel axiales Verfahren der Förderbänder wird es ermöglicht zwei Materialstreifen zeitgleich mit hoher axialer Genauigkeit aufzulegen.

Eine weitere vorteilhafte Weiterbildung sieht vor, dass das Fördern der Materialstreifen mit den Förderbändern zeitgleich mit unabhängigen Geschwindigkeiten durchführbar ist. Durch ein Fördern mit unterschiedlichen Geschwindigkeiten kann eine Toleranz der Materialsteifen in Umfangsrichtung verringert werden.

Eine weitere vorteilhafte Weiterbildung sieht vor, dass die Materialstreifen bei oder nach dem Auflegen auf die Förderbänder auf den Förderbändern fixiert werden. Hierdurch wird sichergestellt, dass keine Relativbewegung zwischen dem Materialstreifen und dem Bandmaterial des Förderbandes stattfindet, nachdem die Kontur und Ausrichtung des Materialstreifens erfasst wurde und bevor der Materialstreifen auf der Reifenbautrommel aufgelegt wird. Eine besonders hohe Auflegegenauigkeit wird erreicht.

Eine weitere vorteilhafte Weiterbildung sieht vor, dass zu Beginn und beziehungsweise oder am Ende des Auflegens des Materialstreifens auf der Reifenbautrommel das axiale Verfahren des ersten Förderbandes und beziehungsweise oder des zweiten Förderbandes axial zur Reifenbautrommel von einem in einem ersten Schritt ermitteltem Verfahrweg abweicht, insbesondere unter Berücksichtigung der Geometrie, auf die der Materialstreifen auf der Reifenbautrommel aufgelegt wird. Ein in einem ersten Schritt ermittelter Verfahrweg kann nur die Soll-Ist-Abweichung der Kontur und Ausrichtung berücksichtigen, wobei in einem weiteren Schritt weitere Parameter, wie die Geometrie der Unterlage des Materialstreifens auf der Reifenbautrommel berücksichtigt wird. Eine erhöhte Genauigkeit des aufgelegten Materialstreifens wird ermöglicht.

Erfindungsgemäß ist eine Verwendung einer erfindungsgemäßen Auflegevorrichtung zur Durchführung eines erfindungsgemäßen Verfahrens vorgesehen.

Erfindungsgemäß ist ein Computerprogrammprodukt für ein erfindungsgemäßes Verfahren zum Betreiben einer Auflegevorrichtung zum Auflegen von vorabgelängten Materialstreifen für Reifenbauteile auf einer rotierenden Reifenbautrommel, umfassend Befehle, die bei der Ausführung des Programms durch zumindest eine Prozessoreinheit diese veranlasst das erfindungsgemäße Verfahren auszuführen vorgesehen.

Die Erfindung lässt zahlreiche Ausführungsformen zu. Zur weiteren Verdeutlichung ihres Grundprinzips ist eine davon in den Zeichnungen dargestellt und wird nachfolgend beschrieben. Diese zeigt in
Fig. 1 eine Auflegevorrichtung zum Auflegen von vorabgelängten Materialstreifen für Reifenbauteile mit einer rotierenden Reifenbautrommel in Draufsicht;
Fig. 2 perspektivisch eine Auflegevorrichtung zum Auflegen von vorabgelängten Materialstreifen für Reifenbauteile auf einer rotierenden Reifenbautrommel.

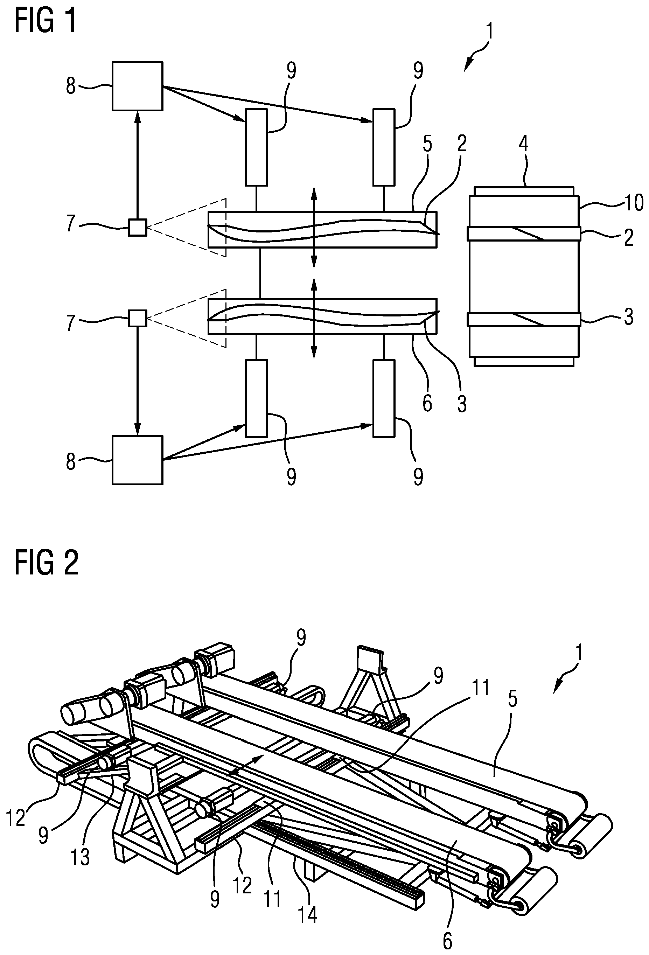

Figur 1 zeigt eine Auflegevorrichtung 1 zum Auflegen von einem ersten vorabgelängten Materialstreifen 2 und einem zweiten vorabgelängten Materialstreifen 3 für Reifenbauteile mit einer rotierenden Reifenbautrommel 4 in Draufsicht. Die Materialstreifen 2, 3 werden einem ersten Förderband 5 und einem zweiten Förderband 6 in der Darstellung links zugeführt und mittels der Förderbänder 5, 6 zur Reifenbautrommel 4 gefördert und auf diese aufgelegt. Die Kontur und Ausrichtung der Materialstreifen 2, 3 werden nach dem Auflegen auf die Förderbänder 5, 6 mit einer Vermessungsvorrichtung 7, beispielweise einer Kamera, aufgenommen. Wobei für jeden Materialstreifen 2, 3 eine Kamera vorgesehen ist. Die Kameras übermitteln die durch sie erzeugten Istgrößen an eine Prozessoreinheit 8, die die Istgrößen verarbeitet und mit Sollgrößen vergleicht. Wobei die Sollgrößen einer idealen Ausrichtung und Kontur entsprechen. Die Prozessoreinheit 8, für eine einfachere Darstellbarkeit zweifach dargestellt, gibt folgend Steuersignale an Aktoren 9 aus. Die Steuersignale berücksichtigen die Differenz zwischen den Sollgrößen und Istgrößen sowie weitere Eigenschaften des Materialstreifens 2, 3, wie beispielweise das Haftverhalten des Materialstreifens 2, 3 auf der Unterlage, auf die der Materialstreifen 2, 3 aufgelegt wird oder die Biegsamkeit des Materialstreifens 2, 3. Weiterhin wird die Kontur der Unterlage berücksichtigt. Weicht die Unterlage von einer Zylinderform ab, führt dies zu einem axialen Verrutschen des Materialstreifens 2, 3, insbesondere an den Enden des Materialstreifens 2, 3. Dies wird in den Steuersignalen mitberücksichtigt. Die Steuersignale lassen die vier Aktoren 9 derart verfahren, dass die Förderbänder 5, 6 unter Berücksichtigung der genannten Parameter in axialer Richtung der Reifenbautrommel 4 derart verfahren, dass die Materialstreifen 2, 3 mit hoher Genauigkeit in axialer Richtung auf die Reifenbautrommel 4 aufgelegt werden. Weiterhin können die Fördergeschwindigkeiten der Förderbänder 5, 6 einzeln angesteuert werden, so dass auch Abweichungen der Materialstreifenlängen beim Aufwickeln auf die Reifenbautrommel 4 berücksichtigt werden können. Auf der Reifenbautrommel 4 dargestellt befinden sich ein Superbauteil 10 auf das zwei Materialstreifen 2, 3 aufgelegt wurden.

In Figur 2 ist perspektivisch die Auflegevorrichtung der Figur 1 zum Auflegen von vorabgelängten Materialstreifen 2, 3 für Reifenbauteile auf einer rotierenden Reifenbautrommel 4 dargestellt. Die beiden Förderbänder 5, 6 sind jeweils auf zwei Schlitten 11, die jeweils durch einen Aktor 9 angetrieben sind, senkrecht zu ihrer Förderrichtung, also axial zur Reifenbautrommel 4, verfahrbar gelagert, wie es mit dem Pfeil angedeutet ist. Die Schlitten 11 sind paarweise auf Führungsschienen 12 gelagert, die über einen Hilfsrahmen 13 miteinander verbunden sind. Der Hilfsrahmen 13 ist translatorisch in Förderrichtung der Förderbänder 5, 6 verfahrbar auf einem Rahmen 14 gelagert. Der Rahmen 14 ist schwenkbar um die Normale der Förderbandflächen gelagert.

### Bezugszeichenliste

- 1: Auflegevorrichtung
- 2: erster Materialstreifen
- 3: zweiter Materialstreifen
- 4: Reifenbautrommel
- 5: erstes Förderband

- 6: zweites Förderband
- 7: Vermessungsvorrichtung
- 8: Prozessoreinheit
- 9: Aktoren
- 10: Superbauteil

- 11: Schlitten
- 12: Führungsschiene
- 13: Hilfsrahmen
- 14: Rahmen

## Patentansprüche

1. Auflegevorrichtung (1) zum Auflegen von vorabgelängten Materialstreifen (2, 3) für Reifenbauteile auf einer rotierenden Reifenbautrommel (4), wobei die Auflegevorrichtung (1) ein erstes Förderband (5) aufweist, wobei die Kontur und Ausrichtung eines ersten Materialstreifens (2) auf dem ersten Förderband (5) automatisiert erfassbar sind und die zur Reifenbautrommel (4) axiale Ausrichtung des ersten Materialstreifens (2) automatisiert an eine Sollgröße anpassbar ist,
**dadurch gekennzeichnet, dass**
die Auflegevorrichtung (1) dazu eingerichtet ist zeitgleich die Kontur und Ausrichtung eines zweiten Materialstreifens (3) auf einem zweiten Förderband (6) automatisiert zu erfassen und die zur Reifenbautrommel (4) axiale Ausrichtung des zweiten Materialstreifens (3) unabhängig von der axialen Ausrichtung des ersten Materialstreifens (2) automatisiert an eine Sollgröße anzupassen.

2. Auflegevorrichtung (1) nach Anspruch 1, **dadurch gekennzeichnet, dass** das erste Förderband (5) und das zweite Förderband (6) Haltemittel aufweisen zum Halten des ersten Materialstreifens (2) und des zweiten Materialstreifens (3).

3. Auflegevorrichtung (1) nach Anspruch 2, **dadurch gekennzeichnet, dass** die Haltemittel den ersten Materialstreifen (2) und den zweiten Materialstreifen (3) an einer Vielzahl von Stellen, insbesondere über die gesamte Ausdehnung der Materialstreifen (2, 3) an den Förderbändern (5, 6) halten.

4. Auflegevorrichtung (1) nach Anspruch 2 oder 3, **dadurch gekennzeichnet, dass** die Haltemittel in Form von Magneten oder in Form eines Vakuumbandes ausgeführt sind.

5. Auflegevorrichtung (1) nach einem der vorangehenden Ansprüche, **dadurch gekennzeichnet, dass** das erste Förderband (5) dazu eingerichtet ist mit einer Geschwindigkeit zu fördern die von der Geschwindigkeit des zweiten Förderbandes (6) abweicht.

6. Auflegevorrichtung (1) nach einem der vorangehenden Ansprüche, **dadurch gekennzeichnet, dass** die Auflegevorrichtung (1) eine Vermessungsvorrichtung (7) zur Vermessung der Kontur und Ausrichtung des ersten Materialstreifens (2) und des zweiten Materialstreifens (3) aufweist, wobei die von der Vermessungsvorrichtung (7) erzeugten Messgrößen mittels einer Prozessoreinheit (8) der Auflegevorrichtung (1) auswertbar sind und zur Ansteuerung von Aktoren (9) der Auflegevorrichtung (1) zum Positionieren von dem ersten Materialstreifen (2) und dem zweiten Materialstreifen (3) verwendbar sind.

7. Auflegevorrichtung (1) nach einem der vorangehenden Ansprüche, **dadurch gekennzeichnet, dass** das erste Förderband (5) und das zweite Förderband (6) mittels voneinander unabhängiger Aktoren (9) axial zur Reifenbautrommel (4) verfahrbar gelagert sind, wobei insbesondere zwei Aktoren (9) zum Verfahren eines Förderbandes (5, 6) vorgesehen sind.

8. Auflegevorrichtung (1) nach einem der vorangehenden Ansprüche, **dadurch gekennzeichnet, dass** die Auflegevorrichtung (1) dazu eingerichtet ist die Materialstreifen (2, 3) von unten oder von oben auf die Reifenbautrommel (4) aufzulegen.

9. Auflegevorrichtung (1) nach einem der vorangehenden Ansprüche, **dadurch gekennzeichnet, dass** das erste Förderband (5) und das zweite Förderband (6) translatorisch und/oder rotatorisch verfahrbar auf einem Rahmen (14) gelagert sind.

10. Verfahren zum Betreiben einer Auflegevorrichtung (1) insbesondere nach einem der vorangehenden Ansprüche mit den Schritten:
a) Auflegen von einem ersten Materialstreifen (2) auf ein erstes Förderband (5) und von einem zweiten Materialstreifen (3) auf ein zweites Förderband (6),
b) Fördern der Materialstreifen (2, 3) mit den Förderbändern (5, 6),
c) Vermessen der Kontur und Ausrichtung der Materialstreifen (2, 3) unter Erzeugung von Messwerten,
d) Vergleichen der Messwerte mit Sollgrößen und Berechnung von Verfahrwegen des ersten Förderbandes (5) und des zweiten Förderbandes (6) axial zur Reifenbautrommel (4),
e) Zeitgleiches Auflegen der Materialstreifen (2, 3) auf der Reifenbautrommel (4), während voneinander unabhängig das erste Förderband (5) und das zweite Förderband (6) axial zur Reifenbautrommel (4) verfahren werden.

11. Verfahren nach Anspruch 10, **dadurch gekennzeichnet, dass** das Fördern der Materialstreifen (2, 3) mit unabhängigen Geschwindigkeiten durchführbar ist.

12. Verfahren nach Anspruch 10 oder 11, **dadurch gekennzeichnet, dass** die Materialstreifen (2, 3) bei oder nach dem Auflegen auf die Förderbänder (5, 6) auf den Förderbändern (5, 6) fixiert werden.

13. Verfahren nach einem der Ansprüche 10 bis 12, **dadurch gekennzeichnet, dass** zu Beginn und/oder am Ende des Auflegens des Materialstreifens (2, 3) auf der Reifenbautrommel (4) das axiale Verfahren des ersten Förderbandes (5) und/oder des zweiten Förderbandes (6) axial zur Reifenbautrommel (4) von einem in einem ersten Schritt ermitteltem Verfahrweg abweicht, insbesondere unter Berücksichtigung der Geometrie, auf die der Materialstreifen (2, 3) auf der Reifenbautrommel (4) aufgelegt wird.

14. Verwendung einer Auflegevorrichtung (1) nach einem der Ansprüche 1 bis 9 zur Durchführung eines Verfahrens nach einem der Ansprüche 10 bis 13.

15. Computerprogrammprodukt für ein Verfahren zum Betreiben einer Auflegevorrichtung (1) zum Auflegen von vorabgelängten Materialstreifen (2, 3) für Reifenbauteile auf einer rotierenden Reifenbautrommel (4), umfassend Befehle, die bei der Ausführung des Programms durch zumindest eine Prozessoreinheit (8) diese veranlasst das Verfahren nach einem der Ansprüche 10 bis 13 auszuführen.

## Claims

1. Placing device (1) for placing material strips (2, 3) previously cut to length for tyre components on a rotating tyre building drum (4), wherein the placing device (1) has a first conveyor belt (5), wherein the contour and alignment of a first material strip (2) on the first conveyor belt (5) are automatically detectable and the axial alignment of the first material strip (2) relative to the tyre building drum (4) is automatically adaptable to a setpoint variable, **characterized in that** the placing device (1) is specified to simultaneously detect automatically the contour and alignment of a second material strip (3) on a second conveyor belt (6) and to adapt automatically the axial alignment of the second material strip (3) relative to the tyre building drum (4) to a setpoint variable independently of the axial alignment of the first material strip (2).

2. Placing device (1) according to Claim 1, **characterized in that** the first conveyor belt (5) and the second conveyor belt (6) have holding means for holding the first material strip (2) and the second material strip (3).

3. Placing device (1) according to Claim 2, **characterized in that** the holding means hold the first material strip (2) and the second material strip (3) at a multiplicity of points, in particular over the entire extent of the material strips (2, 3), on the conveyor belts (5, 6).

4. Placing device (1) according to Claim 2 or 3, **characterized in that** the holding means are embodied in the form of magnets or in the form of a vacuum belt.

5. Placing device (1) according to one of the preceding claims, **characterized in that** the first conveyor belt (5) is specified to convey at a speed deviating from the speed of the second conveyor belt (6).

6. Placing device (1) according to one of the preceding claims, **characterized in that** the placing device (1) has a measuring device (7) for measuring the contour and alignment of the first material strip (2) and the second material strip (3), wherein the measured variables generated by the measuring device (7) are able to be evaluated by means of a processor unit (8) of the placing device (1) and able to be used to control actuators (9) of the placing device (1) for positioning the first material strip (2) and the second material strip (3).

7. Placing device (1) according to one of the preceding claims, **characterized in that** the first conveyor belt (5) and the second conveyor belt (6) are mounted so as to be displaceable axially relative to the tyre building drum (4) by mutually independent actuators (9), wherein in particular two actuators (9) are provided for displacing one conveyor belt (5, 6).

8. Placing device (1) according to one of the preceding claims, **characterized in that** the placing device (1) is specified to place the material strips (2, 3) onto the tyre building drum (4) from below or from above.

9. Placing device (1) according to one of the preceding claims, **characterized in that** the first conveyor belt (5) and the second conveyor belt (6) are mounted on a frame (14) so as to be displaceable in a translational and/or rotational manner.

10. Method for operating a placing device (1), in particular according to one of the preceding claims, comprising the steps of:
a) placing a first material strip (2) on a first conveyor belt (5) and a second material strip (3) on a second conveyor belt (6),
b) conveying the material strips (2, 3) by the conveyor belts (5, 6),
c) measuring the contour and alignment of the material strips (2, 3) by generating measured values,
d) comparing the measured values with setpoint variables and computing displacement paths of the first conveyor belt (5) and of the second conveyor belt (6) axially to the tyre building drum (4),
e) simultaneously placing the material strips (2, 3) on the tyre building drum (4) while the first conveyor belt (5) and the second conveyor belt (6) are displaced, mutually independently, axially relative to the tyre building drum (4),

11. Method according to Claim 10, **characterized in that** the conveying of the material strips (2, 3) is able to be carried out at independent speeds.

12. Method according to Claim 10 or 11, **characterized in that** the material strips (2, 3) are fixed on the conveyor belts (5, 6) during or after placing on the conveyor belts (5, 6).

13. Method according to one of Claims 10 to 12, **characterized in that** at the beginning and/or end of placing the material strip (2, 3) on the tyre building drum (4), the axial displacement of the first conveyor belt (5) and/or of the second conveyor belt (6) axially relative to the tyre building drum (4) deviates from a displacement path determined in a first step, in particular while taking into account the geometry onto which the material strip (2, 3) is placed on the tyre building drum (4).

14. Use of a placing device (1) according to one of Claims 1 to 9 for carrying out a method according to one of Claims 10 to 13.

15. Computer program product for a method for operating a placing device (1) for placing material strips (2, 3) previously cut to length for tyre components on a rotating tyre building drum (4), comprising commands which, when executing the program by at least one processor unit (8), prompts the latter to carry out the method according to one of Claims 10 to 13.

## Revendications

1. Dispositif chargeur (1) destiné à charger des bandes de matériau (2, 3) préalablement coupées à la longueur voulue pour des composants de pneu sur un tambour de fabrication de pneus (4) rotatif, le dispositif chargeur (1) comportant une première bande transporteuse (5), le contour et l'orientation de la première bande de matériau (2) pouvant être détectés de manière automatisée sur la première bande transporteuse (5) et l'orientation axiale de la première bande de matériau (2) par rapport au tambour de fabrication de pneus (4) pouvant être adaptée de manière automatisée à une taille de consigne, **caractérisé en ce que** le dispositif chargeur (1) est mis au point pour détecter simultanément de manière automatisée le contour et l'orientation de la deuxième bande de matériau (3) sur une deuxième bande transporteuse (6) et pour adapter de manière automatisée à une taille de consigne l'orientation axiale de la deuxième bande de matériau (3) par rapport au tambour de fabrication de pneus (4) indépendamment de l'orientation axiale de la première bande de matériau (2).

2. Dispositif chargeur (1) selon la revendication 1, **caractérisé en ce que** la première bande transporteuse (5) et la deuxième bande transporteuse (6) comportent des moyens de maintien destinés à maintenir la première bande de matériau (2) et la deuxième bande de matériau (3).

3. Dispositif chargeur (1) selon la revendication 2, **caractérisé en ce que** les moyens de maintien maintiennent la première bande de matériau (2) et la deuxième bande de matériau (3) sur une pluralité d'emplacements, en particulier sur la totalité de l'extension des bandes de matériau (2, 3) sur les bandes transporteuses (5, 6).

4. Dispositif chargeur (1) selon la revendication 2 ou 3, **caractérisé en ce que** les moyens de maintien sont réalisés sous la forme d'aimants ou sous la forme d'une bande sous vide.

5. Dispositif chargeur (1) selon l'une des revendications précédentes,
**caractérisé en ce que** la première bande transporteuse (5) est mise au point pour le transport à une vitesse, qui s'écarte de la vitesse de la deuxième bande transporteuse (6).

6. Dispositif chargeur (1) selon l'une des revendications précédentes,
**caractérisé en ce que** le dispositif chargeur (1) comporte un dispositif de mesure (7) destiné à mesurer le contour et l'orientation de la première bande de matériau (2) et de la deuxième bande de matériau (3), les grandeurs de mesure générées par le dispositif de mesure (7) pouvant être évaluées au moyen d'une unité de processeur (8) du dispositif chargeur (1) et pouvant être utilisées pour piloter des actionneurs (9) du dispositif chargeur (1) pour positionner la première bande de matériau (2) et la deuxième bande de matériau (3).

7. Dispositif chargeur (1) selon l'une des revendications précédentes,
**caractérisé en ce que** la première bande transporteuse (5) et la deuxième bande transporteuse (6) sont montées de manière à pouvoir être déplacées axialement par rapport au tambour de fabrication de pneus (4) au moyen d'actionneurs (9) indépendants les uns des autres, deux actionneurs (9) étant en particulier prévus pour déplacer une bande transporteuse (5, 6).

8. Dispositif chargeur (1) selon l'une des revendications précédentes,
**caractérisé en ce que** le dispositif chargeur (1) est mis au point pour charger les bandes de matériau (2, 3) depuis le bas ou le haut sur le rouleau de fabrication de pneus (4).

9. Dispositif chargeur (1) selon l'une des revendications précédentes,
**caractérisé en ce que** la première bande transporteuse (5) et la deuxième bande transporteuse (6) sont montées sur un cadre (14) de manière à pouvoir être déplacées par translation et/ou par rotation.

10. Procédé destiné à faire fonctionner un dispositif chargeur (1) en particulier selon l'une des revendications précédentes, avec les étapes :
a) chargement d'une première bande de matériau (2) sur une première bande transporteuse (5) et d'une deuxième bande de matériau (3) sur une deuxième bande transporteuse (6),
b) transport des bandes de matériau (2, 3) avec les bandes transporteuses (5, 6),
c) mesure du contour et orientation des bandes de matériau (2, 3) en générant des valeurs de mesure,
d) comparaison des valeurs de mesure à des tailles de consigne et calcul de trajets de déplacement de la première bande transporteuse (5) et de la deuxième bande transporteuse (6) axialement par rapport au tambour de fabrication de pneus (4),
e) chargement simultané des bandes de matériau (2, 3) sur le tambour de fabrication de pneus (4), pendant que la première bande transporteuse (5) et la deuxième bande transporteuse (6) sont déplacées axialement par rapport au tambour de fabrication de pneus (4) indépendamment l'une de l'autre.

11. Procédé selon la revendication 10, **caractérisé en ce que** le transport des bandes de matériau (2, 3) peut être effectué à des vitesses indépendantes.

12. Procédé selon la revendication 10 ou 11, **caractérisé en ce que** les bandes de matériau (2, 3) sont fixées sur les bandes transporteuses (5, 6) lors du chargement ou après celui-ci sur les bandes transporteuses (5, 6).

13. Procédé selon l'une des revendications 10 à 12, **caractérisé en ce qu'**au début et/ou à la fin du chargement de la bande de matériau (2, 3) sur le tambour de fabrication de pneus (4), le déplacement axial de la première bande transporteuse (5) et/ou de la deuxième bande transporteuse (6) axialement par rapport au tambour de fabrication de pneus (4) s'écarte d'un trajet de déplacement déterminé lors d'une première étape, en particulier en tenant compte de la géométrie, sur laquelle la bande de matériau (2, 3) est chargée sur le tambour de fabrication de pneus (4).

14. Utilisation d'un dispositif chargeur (1) selon l'une des revendications 1 à 9 pour effectuer un procédé selon l'une des revendications 10 à 13.

15. Produit-programme d'ordinateur pour un procédé destiné à faire fonctionner un dispositif chargeur (1) de chargement de bandes de matériau (2, 3) préalablement découpées à la longueur voulue pour des composants de pneu sur un tambour de fabrication de pneus (4) rotatif, comprenant des instructions, qui amènent, lors de l'exécution du programme par au moins une unité de processeur (8), celle-ci à exécuter le procédé selon l'une des revendications 10 à 13.
